# EUROPEAN PATENT SPECIFICATION

(11) **EP 3 320 013 B1**
(45) Date of publication and mention of the grant of the patent: **29.04.2020**
(21) Application number: 16736981.8
(22) Date of filing: 29.06.2016
(51) Int. Cl.: C08G 59/38, C08G 59/50, C08G 59/68, C08G 59/42

(54) **STABLE HIGH GLASS TRANSITION TEMPERATURE EPOXY RESIN SYSTEM FOR MAKING COMPOSITES**
STABILES EPOXIDHARZSYSTEM MIT HOHER GLASÜBERGANGSTEMPERATUR ZUR HERSTELLUNG VON VERBUNDWERKSTOFFEN
SYSTÈME DE RÉSINE ÉPOXY À TEMPÉRATURE DE TRANSITION VITREUSE ÉLEVÉE STABLE POUR LA FABRICATION DE COMPOSITES

(30) Priority: 07.07.2015 US 201562189246 P
(43) Date of publication of application: 16.05.2018
(73) Proprietor: Dow Global Technologies LLC, Midland, MI 48674 (US)
(72) Inventor: JELTSCH, Krischan, 8810 Horgen (CH); MORLEY, Timothy A., Midland Michigan 48674 (US); KOENIGER, Rainer, Michigan 48674 (US); JELIC, Nebojsa, Midland Michigan 48674 (US); SIKMAN, Zeljko, Michigan 48674 (US); GULYAS, Gyongyi, Lake Jackson, TX 77541 (US); LOTTI, Luca, Midland Michigan 48674 (US)
(74) Representative: Beck Greener LLP
(86) International application number: PCT/US2016/039968
(87) International publication number: WO 2017/007650

(56) References cited:
- WO-A1-2008/064115
- WO-A2-2014/062409
- US-A- 4 798 761
- US-A- 5 102 765

## Description

### FIELD OF THE INVENTION

This invention relates to an epoxy based composition and processes for preparing fiber-reinforced composites.

### INTRODUCTION

For many reasons, it is in some cases advantageous to replace metal structural parts with reinforced organic polymers. Advantages the reinforced organic polymers offer include better resistance to corrosion, the ability to produce parts having complex geometries, and in some cases a superior strength-to-weight ratio. It is this last attribute that has led, and continues to lead, the adoption of reinforced polymers in the transportation industry as replacement for metal structural elements such as chassis members and other structural supports.

Epoxy resin systems are sometimes used as the polymer phase in such composites. Cured epoxy resins are often quite strong and stiff, and adhere well to the reinforcement. An advantage of epoxy resin systems, compared to most thermoplastic systems, is that low molecular weight and low viscosity precursors are used as starting materials. The low viscosity is an important attribute because it allows the resin system to penetrate easily between and wet out the fibers that usually form the reinforcement. This is necessary to avoid cosmetic blemishes such as flow lines, and to produce a high strength composite.

Despite the potential advantages of these polymer composites, they have achieved only a small penetration into the automotive market. The main reason for this is cost. Metal parts can be produced using very inexpensive stamping processes that have the further advantage of producing parts at high operating rates. Polymer composites, on the other hand, must be produced in some sort of mold in which the polymer and reinforcing fibers are held until the polymer cures. The time required for this curing step directly affects production rates and equipment utilization, and therefore costs. Epoxy systems used for making these composites have required long in-mold residence times, and so the production cost has for the most part not been competitive with metal parts. Because of this, the use of epoxy resin composites to replace stamped metal parts has been largely limited to low production run vehicles.

The manufacturing method of choice for making these fiber-reinforced composites is a resin-transfer process, or one of its variants such as vacuum-assisted resin transfer molding (VARTM), the Seeman Composites Resin Infusion Molding Process (SCRIMP), gap resin transfer molding (also known as compression RTM) and wet compression molding. In these processes, the reinforcing fibers are formed into a preform which is placed and impregnated with a mixture of an epoxy resin component and a hardener which flows around and between the fibers, and is cured in a mold to form the composite.

An important consideration is the glass transition temperature (*T*g) of the cured resin. For curing epoxy resin systems, the glass transition temperature increases as the polymerization reactions proceed. It is generally desirable for the resin to develop a glass transition temperature in excess of the mold temperature so the part can be removed from the mold without damage. In some cases, the polymer must in addition achieve a glass transition temperature high enough for the part to perform properly in its intended use. Therefore, in addition to the curing attributes already described, the epoxy system must be one which can attain the necessary glass transition temperature upon full cure.

For applications requiring a higher thermal performance during manufacture, i.e., painting, E-coat, KTL processes, or for final applications where a higher thermal performance may be required, lower glass transition temperature materials would not be suitable due to deformation or damage. While alternatives providing high glass transition temperatures (*T*g > 180°C) are available, most of these systems and/or processes have drawbacks regarding high price, dark color of the resin, long curing times and health and safety restrictions (due to the presence of anhydrides or aromatic amines). Also, for the RTM process, the resin system must maintain the balance of latency for complex mold filling followed by fast curing, while possessing a suitably low viscosity enabling effective processing and displaying the ability to build a high *T*g. Cycloaliphatic amines are a class of material with properties somewhere in between aliphatic and aromatic amines. However, most of these compounds provide a *T*g in the range between 140°C-160°C when used in combination with bisphenol A-based resins. This is not sufficient when compared to the high *T*g values obtained via long curing processes of 2 to 12 hours and the use of 4,4'-diaminodiphenyl sulfone (4-DDS), which in turn is not compatible with the RTM process because it is a solid and has a long curing profile.

It is therefore desirable to have a resin system capable of providing a high *T*g > 180°C, cost effective, non-toxic, colorless / transparent, whilst providing a fast cycle time.

### SUMMARY OF THE INVENTION

The present invention provides a cured epoxy resin as specified in claim 1. This new resin system or composition is able to build a high *T*g of > 195°C after applying a thermal post cure process resembling (in terms of time and temperature) the conditions present in the E-coat or KTL process. The use of a phenyl-substituted imidazole and/or imidazoline-based catalyst, e.g., 2-phenylimidazole or 2-phenyl-2-imidazoline, speeds up the curing cycle, making the resin system particularly useful for RTM. The speed of the curing cycle is typically referred to both in terms of gel time and de-mold time; the latter is defined as the minimum time for which a composite part can be removed easily and without deformations from the mold.

The present invention also provides the combined use of a resin based on bisphenol A with an epoxy novolac type resin to further increase the curing rate while achieving the high *T*g using the method mentioned above. Typically, epoxy novolac resins when used in amounts larger than 20 wt. % in the resin system are not suited to the RTM application due to their extremely high viscosity. However, when blended with the appropriate bisphenol A-based resin, this problem can be overcome.

Specifically, in one aspect, the present invention provides a curable resin system, comprising 1) an epoxy component having two or more epoxy resins, wherein at least one of the epoxy resins is a polyglycidyl ether of a polyphenol having an epoxy equivalent weight of up to about 250 and at least one other epoxy resin is an epoxy novolac resin; 2) a hardener component comprising cycloaliphatic compound containing at least two amine groups for the reaction with the epoxy resin; and 3) a catalyst component comprising at least one of a phenyl-substituted imidazole or imidazoline compound.

In another aspect, the present invention provides a curable resin system wherein polyglycidyl ethers of a polyphenol comprises no more than 3 wt. %, based on total weight of the polyglycidyl ethers of a polyphenol, of mono hydrolyzed resin content; and wherein the cycloaliphatic compound is one of isophoronediamine, a blend of 2- and 4-methylcyclo-hexan-1,3-diamine, a blend of cis- and trans- isomers of cyclohexan-1,2-diamine, 4,4'-diaminodicyclohexylmethane, 1,4-cyclohexane-dimethanamine, or a mixture thereof.

In yet another aspect, the present invention provides a curable resin system having a catalyst, wherein the catalyst is one of 1-methylimidazole, 2-methylimidazole, 2-ethyl-4-methylimidazole, 2-phenyl imidazole, 2-methyl-2-imidazoline, 2-phenyl-2-imidazoline; triethylamine, tripropylamine, N,N-dimethyl-1-phenylmethanamine, 2,4,6-tris(dimethylaminomethyl)phenol and tributylamine; ethyltriphenylphosphonium chloride, ethyltriphenylphosphonium bromide and ethyltriphenyl-phosphonium acetate, benzyltrimethylammonium chloride and benzyltrimethylammonium hydroxide; various carboxylic acid compounds, and mixtures thereof. In a preferred embodiment, the catalyst is 2-phenylimidazole or 2-phenyl-2-imidazoline.

The present invention also provides a cured fiber-reinforced composite made from the resin system of the present invention and provides such composite with a glass transition temperature greater than 180°C.

### DETAILED DESCRIPTION OF THE INVENTION

Applicants have found a unique resin system with the combination of an epoxy component and a hardener component along with a catalyst. The material, after a thermal post cure step following the removal of the mixture from the mold, provides a unique and unexpected combination of fast cure and high (>195°C) glass transition temperature cured resin system.

### 1. The Epoxy Component

In the present invention, the epoxy component contains two or more epoxy resins having an average of two or more epoxide groups per molecule; such groups are curable by reaction with, e.g., a primary or secondary amine. The epoxy component contains at least 10% by weight of one epoxy resin which is one or more polyglycidyl ethers of a polyphenol having an epoxy equivalent weight of up to about 250 g/eq. In the resin system of the present invention, the epoxy component contains about, based on the total weight of the epoxy component, more than 10 wt. %, preferably more than 20 wt. %, and more preferably more than 40 wt. % of such polyglycidyl ethers of a polyphenol resin.

The polyglycidyl ether of a polyphenol resin useful in the present invention has a lower mono hydrolyzed resin content. The resin may contain, for example and based on the total weight of the polyglycidyl ether of a polyphenol resin, no more than 3 wt. %, preferably no more than 2 wt. % and still more preferably no more than 1 wt. % of mono hydrolyzed resin content. Mono hydrolyzed resins are α-glycol compounds formed by the addition of a molecule of water to an epoxide group. The presence of significant quantities of mono hydrolyzed content tends to increase the viscosity of the epoxy component, and in turn that of the epoxy resin/hardener mixture.

In a preferred embodiment, the other epoxy resins in the epoxy component contain epoxy novolac resins. U.S. Patent No. 2,829,124 teaches the synthesis of similar epoxy novolac resin, and since then epoxy novolac resins have seen wide spread use in many different applications, including high glass transition temperature compounds. Epoxy novolac resins useful in the present invention can be generally described as methylene-bridged polyphenol compounds, in which some or all of the phenol groups are capped with an epoxy containing group, typically by reaction of the phenol groups with epichlorohydrin to produce the corresponding glycidyl ether. The phenol rings may be unsubstituted, or may contain one or more substituent groups, which, if present are preferably alkyl having up to six carbon atoms and more preferably methyl. The epoxy novolac resin may have an epoxy equivalent weight (in g/eq) of about 156 to 300, preferably about 170 to 225 and especially from 170 to 190. The epoxy novolac resin may contain, for example, from 2 to 10, preferably 3 to 6, more preferably 3 to 5 epoxide groups per molecule. Among the suitable epoxy novolac resins are those having the general structure: 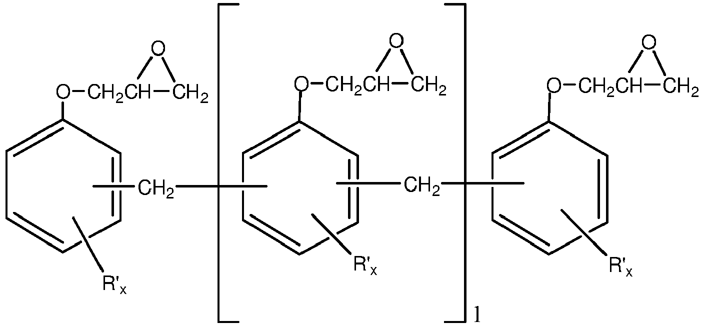 in which 1 is an integer from 0 to 8, preferably 1 to 4, more preferably 1 to 3, each R' is independently alkyl or inertly substituted alkyl, and each x is an integer from 0 to 4, preferably 0 to 2 and more preferably 0 to 1. R' is preferably methyl, if present. In the resin system of the present invention, the epoxy component contains about, based on the total weight of the epoxy component, less than 90 wt. %, preferably less than 80 wt. %, and more preferably less than 70 wt. % of such epoxy novolac type resins.

Furthermore, the epoxy component may also contain optional ingredients. Among these are solvents, or reactive diluents such as those described in WO 2008/140906; other optional ingredients commonly used include pigments, antioxidants, preservatives, impact modifiers, short (up to about 6 inches (15.24 cm) in length, preferably up to 2 inches (5.08 cm) in length, more preferably up to about ½ inch (1.27 cm) in length) reinforcing fibers, non-fibrous particulate fillers including micro- and nano-particles, wetting agents and the like. An electro-conductive filler may be present in the epoxy component as disclosed in WO2008140906.

In other embodiments, resin compositions may also include toughening agents. Toughening agents function by forming a secondary phase within the polymer matrix. This secondary phase is rubbery and/or softer than the polymer matrix formed without the presence of toughening agents, and hence is capable of crack growth arrestment, providing improved impact toughness. Toughening agents may include polysulfones, silicon-containing elastomeric polymers, polysiloxanes, elastomeric polyurethanes, and others.

### 2. The Hardener Component

The hardener component of the present resin system is a cycloaliphatic compound containing at least two amine groups for the reaction with the epoxy resin. Typical examples of cycloaliphatic amines include isophoronediamine (CAS 2855-13-2), a blend of 2- and 4-methylcyclohexan-1,3-diamine (CAS 13897-55-7), a blend of cis- and trans-isomers of cyclohexan-1,2-diamine (often referred to as DACH, CAS 694-83-7), 4,4'-diaminodicyclohexylmethane (CAS 1761-71-3), 1,4-cyclohexanedimethanamine (CAS 2549-93-1), and others. In one preferred embodiment, the hardener component of the present invention contains over 80 wt. % and in a more preferred embodiment over 90 wt. % of DACH, based on the total weight of the hardener component.

### 3. The Catalyst

The present invention also provides the use of a separate catalyst, as opposed to relying solely on the hardener, to promote the polymerization reaction between the hardener and the epoxy resin. In a preferred embodiment, the catalyst is first added to the hardener component before mixing with the resin component.

The catalyst can be used in conjunction with one or more other catalysts. If such an added catalyst is used, suitable such catalysts include those described in, for example, U.S. Patent Nos. 3,306,872, 3,341,580, 3,379,684, 3,477,990, 3,547,881, 3,637,590, 3,843,605, 3,948,855, 3,956,237, 4,048,141, 4,093,650, 4,131,633, 4,132,706, 4,171,420, 4,177,216, 4,302,574, 4,320,222, 4,358,578, 4,366,295, and 4,389,520, and WO 2008/1.

The catalyst is from the class of imidazole or imidazoline compounds having a phenyl substituent, such as 2-phenylimidazole or 2-phenyl-2-imidazoline.

The resin system of the present invention typically comprises 1 wt. %, preferably 2.5 wt. % and more preferably 5 wt. % of the catalyst component, based on the total weight of the hardener component.

### 4. Other components in the Resin System

The curable reaction mixture may also contain other optional components such as toughening agents, internal mold release agents (IMR), pigments, antioxidants, preservatives, short reinforcing fibers (up to about 6 inches (15.24 cm) in length, preferably up to 2 inches (5.08 cm) in length, more preferably up to about ½ inch (1.27 cm) in length), non-fibrous particulate fillers including micro- and nano-particles, wetting agents, anti-UV aging compounds, and the like. An electro-conductive filler may also optionally be present in the hardener mixture.

Suitable toughening agents include natural or synthetic polymers having a *T*g lower than -20°C. Such synthetic polymers include natural rubber, styrene-butadiene rubber, polybutadiene rubber, isoprene rubber, polyethers such as polypropylene oxide, polytetrahydrofuran and butylene oxide-ethylene oxide block copolymers, core-shell rubbers, elastomeric polyurethane particles, mixtures of any two or more of the foregoing, and the like. The rubbers are preferably present in the form of small particles that become dispersed in the polymer phase of the resin system. The rubber particles can be dispersed within the epoxy resin and/or within the hardener. It is generally preferred to cure the epoxy resin and the hardener mixture in the presence of an internal mold release agent. Such an internal mold release agent may constitute up to 5%, more preferably up to about 1% of the total weight of the resin composition. Suitable internal mold release agents are well known and commercially available, including those marketed as Marbalease™ by Rexco-USA, Mold-Wiz™ by Axel Plastics Research Laboratories, Inc., Chemlease™ by Chem-Trend, PAT™ by Würtz GmbH, Waterworks Aerospace Release by Zyvax and Kantstik™ by Specialty Products Co. In addition to (or instead of) adding the internal mold release agent during mixing, it is also possible to combine such an internal mold release agent into the epoxy component and/or the hardener component before the epoxy component and the hardener component are brought together.

Suitable particulate fillers have an aspect ratio of less than 5 and preferably less than 2, and do not melt or thermally degrade under the conditions of the curing reaction. Suitable fillers include, for example, glass flakes, aramid particles, carbon black, carbon nanotubes, various clays such as montmorillonite, halloysite, phillipsite, and other mineral fillers such as wollastonite, talc, mica, titanium dioxide, barium sulfate, calcium carbonate, calcium silicate, flint powder, carborundum, molybdenum silicate, sand, and the like. Some fillers are somewhat electro-conductive, and their presence in the composite can increase the electro-conductivity of the composite itself. In some applications, notably automotive applications, it is preferred that the composite is sufficiently electro-conductive that coatings can be applied to the composite using E-coat methods, in which an electrical charge is applied to the composite and the coating becomes electrostatically attracted to the composite. Conductive fillers of this type include metal particles (such as aluminum and copper), carbon black, carbon nanotubes, graphite and the like.

In order to obtain a clear and transparent composite, which may be aesthetically pleasant, antioxidants and/or reducing agents can conveniently be added to the hardener component. Small amounts of alkali metal borohydrides, such as sodium borohydride or potassium borohydride, may also be used as inhibitors of yellowing for liquid amines. The use of alkali metal borohydrides dispersed in amines such as DACH or isophoronediamine as non-yellowing agent provides benefit also when the amines are used as hardeners for epoxy resins. This leads to epoxy compounds which do not yellow over time even if put under direct sunlight.

### 5. The Resin System

The hardener component and epoxy component are combined in amounts such that at least 0.80 epoxy equivalents are provided to the reaction mixture of the two components per amine hydrogen equivalent provided by the epoxy component. A preferred amount is at least 0.90 epoxy equivalents per amine hydrogen equivalent and a still more preferred amount is at least 1.00 epoxy equivalents per amine hydrogen equivalent. The epoxy component can be provided in large excess, such as up to 10 epoxy equivalents per amine hydrogen equivalent provided to the reaction mixture, but preferably there are no more than 2.00, more preferably no more than 1.25 and still more preferably no more than 1.10 epoxy equivalents provided per amine hydrogen equivalent.

In some embodiments, the present resin system has, when cured at one temperature comprised between 60 and 180°C, a gel time of at least 15 seconds, at least 20 seconds, or preferably at least 30 seconds, and a demold time no greater than 360 seconds, preferably no greater than 300 seconds and still more preferably no greater than 240 seconds.

Thermoset resins are formed from the resin system of the invention by mixing the epoxy component, the hardener component, and the catalysts at proportions as described above, and curing the resulting mixture. Either or all of the components can be preheated if desired before they are mixed with each other. It is generally necessary to heat the mixture to an elevated temperature to obtain a rapid cure. In a molding process such as the process for making molded composites, the curable reaction mixture is introduced into a mold, which may be, together with any reinforcing fibers and/or inserts as may be contained in the mold, preheated. The curing temperature may be, for example, from 60 to 180°C. When a long (at least 20 seconds, preferably at least 30 seconds) gel time is desirable, the curing temperature preferably is not greater than 160°C. When both a long gel time and a short demold time is wanted, a suitable curing temperature is 80 to 160°C, preferably 100 to 150°C and especially 110 to 140°C.

It is preferred to continue the cure until the resulting resin system attains a glass transition temperature in excess of the cure temperature. The glass transition temperature at the time of demolding is preferably at least 120°C, more preferably at least 130°C, still more preferably at least 140°C and even more preferably at least 150°C. An advantage of this invention is that such glass transition temperatures can be obtained with relatively short curing times; this allows for short cycle times. Demold times at cure temperatures of 100 to 150°C, especially 110 to 140°C, are typically 360 seconds or less, preferably are 300 seconds or less and more preferably 240 seconds.

### 6. Thermal post cure

The post cure thermal process provides a crosslinking of the macromolecules outside of the mold used for the making of the composite. The advantage of carrying out a similar curing outside of the mold is related to productivity, and with respect to a possible roomtemperature ageing, the advantage includes the raise of the glass transition temperature to values well above the initial *T*g as measured on the compound soon after the demolding.

In terms of productivity and with respect to a possible crosslinking operated inside the mold, including an external post cure protocol (e.g., in an oven), the mold is used for a very short time. Thus, many demolded pieces may successively cure together, in a common oven, while production with the mold continues. A pre-requirement for operating a high temperature post curing is that the pieces are removed from the mold without any appreciable deformation, i.e., after a pre-determined suitable demold time.

On the other side, crosslinking must be operated at a certain temperature which, in principle, should be higher than the glass transition temperature of the polymer at demold. In fact, the kinetic of crosslinking will be favored by a certain mobility of macromolecular chains; a similar situation of mobile macromolecular chains is obtained when the polymer is heated above its *T*g*.* If a curing is carried out below the *T*g, instead, only minor improvements of the final *T*g are observed, if none at all.

The resin composition of the present invention can present an initial *T*g at demold in the range of 150 to 175°C; a post curing operation consisting of putting the sample into an oven thermostated at 160 to 230°C typically results in a *T*g increase up to 195°C. The time for operating this post curing protocol should be long enough to allow the polymer to crosslink and build up a macromolecular network. On the other side, minor amounts of unreacted species in the polymer may lead, over time, to an increase of the yellowing of the compound itself. Thus, it is often preferable to carry out the post cure protocol for times comprised between 7.5 minutes to 60 minutes, more preferably between 15 to 45 minutes, and even more preferably between 20 to 30 minutes.

The following examples are provided to illustrate the invention, but not limit the scope thereof. More in particular, while carbon fiber composite parts are described, the invention may also be adapted to the preparation of aramide or glass fiber-reinforced composites. All parts and percentages are by weight unless otherwise indicated.

### EXAMPLES

### Testing Methods

Sampling: all the specimens for the cited tests were taken by plaques of 500 x 270 x 2 mm obtained from an RTM mold. The plaques, both in cases of absence (samples of Table 1) and of presence (samples of Table 2) of fiber reinforcement were cut by means of a water jet cutter to a shape suitable for testing and in compliance with the test norm.

### Differential Scanning Calorimetry (DSC) operated in nitrogen flux:

Samples were cut to small disks of around 2 mm of diameter and to a weight of 10.0 to 15.0 mg. Cure 1: Dynamic DSC was used to determine the entitlement *T*g of the polymers without any post cure treatment. In a heating ramp of 20°C/min the samples were heated from 25 to 200°C for initial curing, cooled in a ramp of 20°C/min to 25°C and kept isothermal at 25°C for one minute. A second ramp from 25 to 200°C was run to obtain the *T*g values.

Cure 2: Dynamic DSC was used to determine the entitlement *T*g of the polymers after a post cure treatment (air filled oven kept seven minutes to an hour at a fixed temperature chosen in between 160 and 230°C). In a heating ramp of 20°C/min the samples were heated from 25 to 250°C, and *T*g is evaluated directly.

The evaluation of the glass transition temperature is operated by means of a software (Mettler-Toledo STARe™) as the inflection point of the heat flux over temperature, i.e., the maximum of the derivative of the curve.

### Chemorheology Experiments:

All rheological measurements are performed with an MCR302 rheometer from Anton Paar equipped with a Peltier heating system, which enables fast temperature control. The instrument is preheated to the test temperature prior to each measurement. A hood covers the plates during the measurements to limit heat loss to the environment. Gelation time (GT) and demold time (DMT) are determined by rheology experiments as follows:

A sample of the mixture is in each case poured into a preheated MCR 301 or 302 rheometer (Anton Paar) (25 mm parallel plates) equipped with a Peltier heating system. The measuring temperature is as indicated in the tables below. The shear storage and shear loss moduli (G' and G") are continuously measured. The time at which the plots of G' and G" intersect (*i.e.,* when G' becomes equal to G") is taken as the gel time. The time at which G" exhibits its peak value is taken as the vitrification point. The vitrification point corresponds well to a demold time. Results are as indicated below.

### Tensile strength (EN ISO 527-1):

Specimens of the samples described in Table 2 were cut to dog-bone shapes according to the norm test and tested via an Instron® dynamometer equipped with steel clamps. The major dimension of the dog-bone shape (length) was set to be perpendicular to the unidirectional fiber orientation in case of carbon fiber fabric type 1. Five specimens per sample were tested.

### Gardner test (ASTM D1544-04):

Indicative Gardner test has been carried out on uncut samples of Table 1 by means of simple visual observation of the color and comparison to a Gardner standard scale.

### Raw Materials

Epoxy A: diglycidyl ether of bisphenol A , having an epoxy equivalent weight of about 180 g/eq and less than 1% by weight of monohydrolyzed resin. Epoxy B: epoxy novolac resin with an average number of -OH groups per molecule of 3.4 and a polydispersity index of 1.6

DACH: 1,2-diaminocyclohexane, a mixture of cis and trans isomers commercially available as Dytek® DCH-99 from INVISTA™.
Catalyst 1: 1-methylimidazole (CAS 616-47-7)
Catalyst 2: 2-methylimidazole (CAS 693-98-1)
Catalyst 3: 2-methyl-2-imidazoline (CAS 534-26-9)
Catalyst 4: 2-phenylimidazole (CAS 670-96-2)
Catalyst 5: 2-phenyl-2-imidazoline (CAS 936-49-2)

All catalysts are commercially available in high purity grades (99+ wt.-%) from Sigma-Aldrich Chemie GmbH, Buchs (SG), Switzerland.

Carbon fiber fabric 1: DowAksa A42 12k, unidirectional fabric (6 plies, 0° angle)

Carbon fiber fabric 2: DowAksa A42 12k, quasi-isotropic fabric (6 plies, angle orientation and sequence [0/90/0/0/90/0]°)

### Sample preparation

The Examples (comparative and inventive) described in Table 1 unless mentioned otherwise have been prepared with the aid of a KraussMaffei high pressure 2-component epoxy RTM machine, operating on a 120-ton press equipped with a thermostated steel mold capable of creating rectangular plaques having dimensions 500 x 270 x 2 mm. The temperature of the components in the epoxy machine has been set to 80°C for the epoxy resin and to 50°C for the hardener component; catalysts, when present, have always been pre-blended with the hardener. Mold temperature has been set to 140°C; injection of the liquid reacting mixture has been performed through an injection hole located in the top part of the mold after mold closure and subsequent evacuation to 0.02 bars. Demold time was determined by making several tests and checking each time if the pieces being removed from the mold looked hard and did not deform under its weight or minor stresses.

The Examples (comparative and inventive ones) described in Table 2, instead, were prepared similarly but with the introduction of carbon fiber fabric plies in the mold before the closure of it, and subsequent evacuation to 0.02 bars. This procedure is common in the RTM technique, and its purpose is to facilitate the impregnation of the fabric with the reacting mixture, and to avoid hole / bubble formation in the polymer matrix. Carbon fiber fabrics have been pre-cut to fit the rectangular shape of the mold.

**Table 1. Components (parts by weight) of the Comparative and Inventive Examples.**

| All cited samples were prepared in absence of reinforcing fiber(s). | | | | | | | |
|---|---|---|---|---|---|---|---|
| | Comparative Ex. 1 | Comparative Ex. 2 | Comparative Ex. 3 | Comparative Ex. 4 | Comparative Ex. 5 | Inventive Ex. 6 | Inventive Ex. 7 |
| Epoxy A | 100 | 60 | 60 | 60 | 60 | 60 | 60 |
| Epoxy B | | 40 | 40 | 40 | 40 | 40 | 40 |
| DACH | 16.1 | 16.2 | 16.2 | 16.2 | 16.2 | 16.2 | 16.2 |
| Catalyst 1 | | | 0.8 | | | | |
| Catalyst 2 | | | | 0.8 | | | |
| Catalyst 3 | | | | | 0.8 | | |
| Catalyst 4 | | | | | | 0.8 | |
| Catalyst 5 | | | | | | | 0.8 |
| Carbon fiber fabric | no | no | no | no | no | no | no |
| Rheology* | 118 | 58 | | | | 54 | |
| *t*_{gel} (S)** | 265 | 118 | | | | 102 | |
| *t*ᵥᵢₜ*** | >>800 | 640 | | | | 292 | |
| Cure 1: Tg (°C) | 120 | 142 | 163 | 168 | 150 | 170 | 153 |
| Experiment Type | Hot Plate & RTM | Hot Plate & RTM | Hot Plate | Hot Plate | Hot Plate | Hot Plate & RTM | Hot Plate |
| Cure 2: Tg (°C) | n/a | 185 | 164 | 170 | 161 | 198 | 197 |
| Gardner after post-curing 200°C/30 minutes | 1 | 1 | 17 (orange) | 16 (orange) | 1 | 3 | 1 |

| | | | | | | | |
|---|---|---|---|---|---|---|---|
| * Time to reach a viscosity of 200 mPas as measured by chemo rheology at 150°C. This is considered to be a practical value for the resin to infuse into the fiber network. ** Tgel refers to gel time as measured by chemo rheology at 150°C. A more theoretical value. *** Tvit refers to vitrification time (related to the demold time) as measured by chemo rheology at 150°C. The demold time is the real advantage over Comparative Example 2, not the Tgel. | | | | | | | |

**Table 2. Composite parts using inventive formulations***

| | Inventive Example 8 | Inventive Example 9 |
|---|---|---|
| Epoxy system | Inventive Example 6 | Inventive Example 6 |
| Carbon fibre fabric type | 1 | 2 |
| Demold time (s) | 240 | 240 |
| Cure 1: Tg (°C) | 179 | 179 |
| Cure 2: Tg (°C) | 193 | 195 |
| EN ISO 527-1: Tensile strength (MPa) | 55.0 | n/a |
| EN ISO 527-1: Young Modulus (MPa) | 8390 | n/a |

| | | |
|---|---|---|
| * Value has been obtained through DMA scan. | | |

### Results

As the results indicate in Table 1, when comparing Comparative Example 1 to Comparative Example 2, a *T*g increase of over 20°C is obtained by including a certain amount of epoxy novolac resin in the resin component. Post curing protocol, operated at 200°C and for 30 minutes, allows the cured composition to raise the Tg to relatively high values, close to 190°C (Comparative Example 2). The system indicated in Comparative Example 2, however, does require long demold times for achieving a degree of polymerization (intended as reaction completion) suitable for operating a removal of the piece from a mold not including piece deformation.

Comparative Examples 3, 4, 5 and Inventive Examples 6 and 7 include different catalysts based on methyl- or phenyl- substituted imidazoles or imidazolines. For all these samples, the demold time is shorter than the one of Comparative Example 2, thus leading to benefits in terms of production time.

Comparative Examples 3 and 4 display a glass transition temperature relatively low also after a post-curing procedure; Comparative Example 5 includes an imidazoline compound and, while displaying a low glass transition temperature after post curing just like Comparative Examples 3 and 4, is transparently clear. Without being bound to any theory, it is possible that a heavy coloring of the final compound is due to the formation of complex species formed thanks to the presence of π orbital systems located on the imidazole rings. When the imidazole ring is partially hydrogenated (imidazoline), instead, said π molecular orbitals are not present anymore, thus the color of the compound is crystal clear.

Inventive Examples 6 and 7 show that compounds incorporating 2-phenyl-imidazole and 2-phenyl-2-imidazoline display not only an increased Tg after a post cure protocol but also a clear coloring. Gardner yellowing scale is further improved when 2-phenyl-2-imidazoline is used instead of 2-phenylimidazole; this represents a further preferred embodiment of the invention.

Inventive Examples 8 and 9 represent a possible use of the inventive composition for the making of carbon composite parts; these composites, one fabricated with unidirectional carbon fiber and one with a quasi-isotropic ply, display glass transition temperatures very close to the ones of the pristine compounds, i.e., those not incorporating any reinforcing fiber and described in Table 1.

## Claims

1. A curable resin system, comprising
1) an epoxy component having two or more epoxy resins, wherein at least one of the epoxy resins is a polyglycidyl ether of a polyphenol having an epoxy equivalent weight of up to about 250 and at least one other epoxy resin is an epoxy novolac resin;
2) a hardener component comprising a cycloaliphatic compound containing at least two amine groups for the reaction with the epoxy resin; and
3) a catalyst component comprising at least one of a phenyl-substituted imidazole or imidazoline compound.

2. The curable resin system of claim 1, wherein the polyglycidyl ether of a polyphenol comprises no more than 3 wt. %, based on total weight of the polyglycidyl ethers of a polyphenol, of mono hydrolyzed resin content; and wherein the cycloaliphatic compound is one of isophoronediamine, a blend of 2- and 4-methyl-cyclohexan-1,3-diamine, a blend of cis- and trans- isomers of cyclohexan-1,2-diamine, 4,4'-diaminodicyclohexylmethane, 1,4-cyclohexanedimethanamine, or a mixture thereof.

3. The curable resin system of claim 1, wherein the epoxy component comprises at least 10 wt. % of the polyglycidyl ether of a polyphenol, based on the total weight of the epoxy component.

4. The curable resin system of claim 1, wherein the epoxy novolac resin has an epoxy equivalent weight of about 156 to 300.

5. The curable resin system of claim 4, wherein the epoxy novolac resin has a chemical structure of: 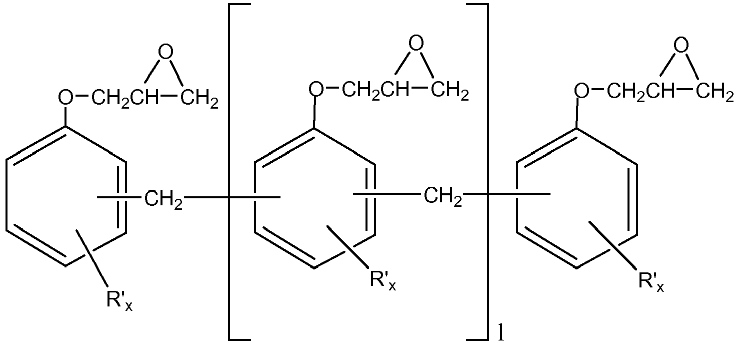 wherein 1 is an integer from 0 to 8, each R' is independently alkyl or inertly substituted alkyl, and each x is independently an integer from 0 to 4, and R' is a methyl group.

6. The curable resin system of claim 1, where in the catalyst is 2-phenylimidazole or 2-phenyl-2-imidazoline.

7. A cured fiber-reinforced composite made from the resin system of claims 1 to 6.

8. The composite of claim 7 having a glass transition temperature greater than 180° C as measured in the specification.

## Patentansprüche

1. Ein härtbares Harzsystem, beinhaltend
1) einen Epoxidbestandteil mit zwei oder mehr Epoxidharzen, wobei mindestens eines der Epoxidharze ein Polyglycidylether eines Polyphenols mit einem Epoxidäquivalentgewicht von bis zu etwa 250 ist und mindestens ein weiteres Epoxidharz ein Epoxid-Novolak-Harz ist;
2) einen Härtungsmittelbestandteil, beinhaltend eine cycloaliphatische Verbindung, die mindestens zwei Amingruppen für die Reaktion mit dem Epoxidharz enthält; und
3) einen Katalysatorbestandteil, beinhaltend mindestens eines von einer phenylsubstituierten Imidazol- oder Imidazolinverbindung.

2. Härtbares Harzsystem gemäß Anspruch 1, wobei der Polyglycidylether eines Polyphenols bezogen auf das Gesamtgewicht des Polyglycidylethers eines Polyphenols nicht mehr als 3 Gew.-% an monohydrolisiertem Harzgehalt beinhaltet; und wobei die cycloaliphatische Verbindung eines von Isophorondiamin, einem Gemisch von 2- und 4-Methyl-cyclohexan-1,3-diamin, einem Gemisch von cis- und trans-Isomeren von Cyclohexan-1,2-diamin, 4,4'-Diaminodicyclohexylmethan, 1,4-Cyclohexandimethanamin oder eine Mischung davon ist.

3. Härtbares Harzsystem gemäß Anspruch 1, wobei der Epoxidbestandteil bezogen auf das Gesamtgewicht des Epoxidbestandteils mindestens 10 Gew.-% des Polyglycidylethers eines Polyphenols beinhaltet.

4. Härtbares Harzsystem gemäß Anspruch 1, wobei das Epoxid-Novolak-Harz ein Epoxidäquivalentgewicht von etwa 156 bis 300 aufweist.

5. Härtbares Harzsystem gemäß Anspruch 4, wobei das Epoxid-Novolak-Harz eine chemische Struktur wie folgt aufweist: 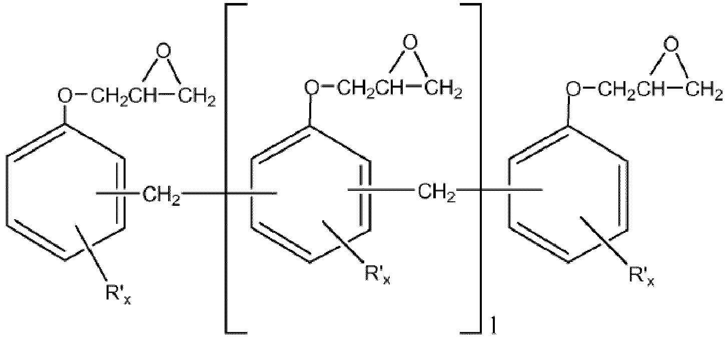 wobei I eine ganze Zahl von 0 bis 8 ist, jeder R' unabhängig Alkyl oder inert substituiertes Alkyl ist und jedes x unabhängig eine ganze Zahl von 0 bis 4 ist, und R' eine Methylgruppe ist.

6. Härtbares Harzsystem gemäß Anspruch 1, wobei in dem Katalysator 2-Phenylimidazol oder 2-Phenyl-2-imidazolin vorliegt.

7. Ein gehärteter faserverstärkter Verbundwerkstoff, hergestellt aus dem Harzsystem gemäß Ansprüchen 1 bis 6.

8. Verbundwerkstoff gemäß Anspruch 7 mit einer Glasübergangstemperatur von mehr als 180 °C, wie in der Spezifikation gemessen.

## Revendications

1. Un système de résine durcissable, comprenant
1) un constituant époxy ayant deux résines époxy ou plus, où au moins une des résines époxy est un éther polyglycidylique d'un polyphénol ayant un poids équivalent d'époxy allant jusqu'à environ 250 et au moins une autre résine époxy est une résine novolaque époxy ;
2) un constituant durcisseur comprenant un composé cycloaliphatique contenant au moins deux groupes amine pour la réaction avec la résine époxy ; et
3) un constituant catalyseur comprenant au moins soit un imidazole substitué par un phényle, soit un composé imidazoline.

2. Le système de résine durcissable de la revendication 1, où l'éther polyglycidylique d'un polyphénol ne comprend pas plus de 3 % en poids, rapporté au poids total des éthers polyglycidyliques d'un polyphénol, de teneur en résine mono hydrolysée ; et où le composé cycloaliphatique est un élément parmi une isophoronediamine, un mélange homogène de 2- et 4-méthyl-cyclohexane-1,3-diamine, un mélange homogène d'isomères cis et trans de cyclohexane-1,2-diamine, 4,4'-diaminodicyclohexylméthane, 1,4-cyclohexanediméthanamine, ou un mélange de ceux-ci.

3. Le système de résine durcissable de la revendication 1, où le constituant époxy comprend au moins 10 % en poids de l'éther polyglycidylique d'un polyphénol, rapporté au poids total du constituant époxy.

4. Le système de résine durcissable de la revendication 1, où la résine novolaque époxy a un poids équivalent d'époxy d'environ 156 à 300.

5. Le système de résine durcissable de la revendication 4, où la résine novolaque époxy a une structure chimique de : 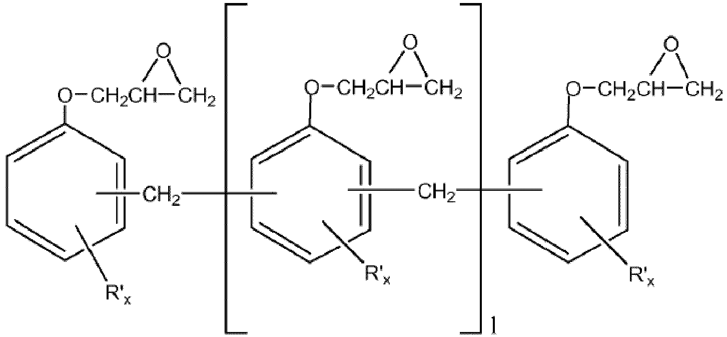 où I est un nombre entier allant de 0 à 8, chaque R' est indépendamment un alkyle ou un alkyle substitué de manière inerte, et chaque x est indépendamment un nombre entier allant de 0 à 4, et R' est un groupe méthyle.

6. Le système de résine durcissable de la revendication 1, où le catalyseur est le 2-phénylimidazole ou la 2-phényl-2-imidazoline.

7. Un composite renforcé de fibres durci fabriqué à partir du système de résine des revendications 1 à 6.

8. Le composite de la revendication 7 ayant une température de transition vitreuse supérieure à 180 °C telle que mesurée dans la spécification.
